# EUROPÄISCHE PATENTSCHRIFT

(11) **EP 1 600 338 B1**
(45) Veröffentlichungstag und Bekanntmachung des Hinweises auf die Patenterteilung: **12.08.2009**
(21) Anmeldenummer: 04026778.3
(22) Anmeldetag: 11.11.2004
(51) Int. Cl.: B60R 21/04, B60R 13/02

(54) **Kraftfahrzeug mit einem Energie absorbierenden Deformationselement**
Vehicle with deformable energy absorbing member
Véhicule avec un élément déformable absorbeur d'énergie

(30) Priorität: 28.05.2004 DE 102004026200
(43) Veröffentlichungstag der Anmeldung: 30.11.2005
(73) Patentinhaber: Dr. Ing. h.c. F. Porsche Aktiengesellschaft, 70435 Stuttgart (DE)
(72) Erfinder: Luik, Klaus, 75417 Muehlacker (DE); Maier, Werner, 71229 Leonberg (DE); Zierle, Matthias, 70794 Filderstadt (DE)

(56) Entgegenhaltungen:
- EP-A- 1 332 932
- DE-A1- 19 505 935
- GB-A- 2 338 457
- US-A- 5 791 716
- US-A- 5 833 303
- US-A1- 2001 019 214

## Beschreibung

Bei der Erfindung wird ausgegangen von einem Kraftfahrzeug mit einem Energie absorbierenden Deformafionselement, gemäß dem Oberbegriff des Anspruchs 1.

Ein gattungsgemäßes Kraftfahrzeug ist der US-A-5 833 303 zu entnehmen. Das Deformationselement wird nierbei aufgeweitet.

Ein weiteres zum Stand der Technik gehörendes Kraftfahrzeug, das als Personenwagen ausgebildet ist, ist der US-A-51 63 730 zu entnehmen. Es besitzt wenigstens ein Rohbauelement, hier eine A-Säule, die an ihrer dem Fahrzeuginnenraum zugewandten Innenseite mit einem Innenverkleidungsteil verblendet ist. Zwischen dem Rohbauelement und dem Innenverkleidungsteil ist ein Deformationselement angeordnet, welches einen Fahrzeuginsassen vor zu hohen Belastungswerten schützen soll, wenn dieser bedingt durch einen Unfall mit einem Körperteil auf das Innenverkleidungsteil trifft. Somit soll das Deformationselement Energie dadurch absorbieren, dass es Bewegungsenergie in Verformungsarbeit bzw. in Wärme umwandelt. Das bekannte Deformationselement ist als langgestrecktes Hohlprofil ausgebildet und besitzt wenigstens einen Befestigungsschenkel und einen Deformationsschenkel. Der Befestigungsschenkel ist mit der Innenfläche des Innenverkleidungsteils verbunden, welche Innenfläche dem Rohbauelement zugewandt ist. Von dem Befestigungsschenkel geht der Deformationsschenkel aus, der sich auf dem Rohbauelement abstützt. Der Befestigungsschenkel ist überdies mit einer Verlängerungsschenkel ausgestattet, so dass neben der Befestigung an dem Innenverkleidungsteil auch eine Halterung an dem Rohbauelement besteht. Als nachteilig kann angesehen werden, dass mit der Befestigung des Deformationselements sowohl am Rohbauelement als auch am Innenverkleidungsteil ein erheblicher Montageaufwand einhergeht.

Aus der EP 1 332 932 A2 ist es bekannt, lediglich an einer Innenfläche eines Innenverkleidungsteils ein Deformationselement zu befestigen. Das Innenverkleidungsteil deckt außerdem noch eine Airbageinheit ab.

Aufgabe der Erfindung ist es, ein gattungsgemäßes Kraftfahrzeug anzugeben, welches diesen Nachteil nicht aufweist.

Gelöst wird diese Aufgabe mit einem Kraftfahrzeug, welches die in Anspruch 1 genannten Merkmale umfasst. Ausgestaltungen der Erfindung sind in den Unteransprüchen angegeben.

Die mit der Erfindung hauptsächlich erzielten Vorteile sind neben einer einfachen Montage des Innenverkleidungsteils und des Deformationselements am Rohbauelement hauptsächlich darin zu sehen, dass beispielsweise eine Geräuschentwicklung zwischen Deformationselement und Rohbauelement weitgehend vermieden werden kann, da der Deformationsschenkel freistehend mit Abstand zum Rohbauelement liegt. Außerdem wird durch das Abstützelement mit dem erfindungsgemäß abgestimmten Deformationsverhalten das Innenverkleidungsteil am Rohbauelement zwar fest gehalten und abgestützt, wodurch einerseits eine sichere Befestigung des Innenverkleidungsteils und außerdem eine einfache Montage erfolgen kann, jedoch eine unerwünscht steife Überbrückung des Deformationselements vermieden wird.

Nach einer Weiterbildung mit den in Anspruch 2 genannten Merkmalen erhält das Innenverkleidungsteil durch die Stege eine Versteifungsstruktur.

Sofern die nach Anspruch 2 vorgeschlagenen Stege vorgesehen sind, wird in einer Weiterbildung der Erfindung mit den in Anspruch 3 genannten Merkmalen ein flächiges Anbinden des Befestigungsschenkels an der Innenseite des Verkleidungsteils erreicht, wenn der Befestigungsschenkel im Bereich der Stege mehrere Aussparungen besitzt, in denen die Stege angeordnet sind.

Besonders bevorzugt wird ein Ausführungsbeispiel entsprechend Anspruch 4, bei dem zwei Deformationselemente in Reihe, jedoch mit Abstand zueinander angeordnet sind, so dass sich in vorteilhafter Weise zwischen den Deformationselementen das Abstützelement für das Innenverkleidungsteil befinden kann.

Für eine einfache Montage des Deformationselementes an dem Innenverkleidungsteil werden gemäß Anspruch 5 beide Deformationselemente über eine Verbindungslasche miteinander verbunden, wobei die Verbindungslasche so angeordnet ist bzw. verläuft, dass sie an dem Abstützelement vorbeigeführt ist.

Sind im Bereich der Verbindungslasche an der Innenseite des Innenverkleidungsteils Stege der Versteifungsstruktur vorgesehen, ist die Verbindungslasche gebogen ausgeführt und überspannt so den Steg, wie dies Anspruch 6 beschreibt.

Für eine einfache Befestigung des Deformationselements an der Innenseite des Innenverkleidungsteils wird in einer Weiterbildung der Erfindung gemäß Anspruch 7 vorgeschlagen, an der Innenseite des Innenverkleidungsteils Befestigungsnasen anzuordnen, die entsprechende Befestigungsdurchbrüche an dem Befestigungsschenkel durchgreifen. Nach dem Zusammensetzen von Deformationselement und Innenverkleidungsteil können die Befestigungsnasen nach einem bevorzugten Ausführungsbeispiel entsprechend Anspruch 8 durch Umformung, beispielsweise durch Wärmeeinwirkung bzw. Schweißen, bearbeitet werden, so dass die umgeformte Befestigungsnase den Rand des Befestigungsdurchbruches übergreift und so das Deformationselement an der Innenseite des Innenverkleidungsteils hält.

Nach einem besonders bevorzugten Ausführungsbeispiel nach Anspruch 9 ist das Abstützelement für das Innenverkleidungsteil als Befestigungsdom ausgebildet, dessen Dach sich auf dem Rohbauelement abstützt.

Es hat sich als besonders vorteilhaft herausgestellt, dass das Deformationsverhalten des Abstützelements dadurch an das Deformationsverhalten des Deformationselements abgestimmt werden kann, wenn zumindest in einer Seitenwand des Befestigungsdomes eine Schwächung, insbesondere ein Schwächungsdurchbruch, vorgesehen ist. Dabei kann der Schwächungsdurchbruch so ausgeführt sein, dass beispielsweise eine Seitenwand des Befestigungsdomes vollständig entfallen kann.

Eine einfache Verbindung zwischen dem Dach des Befestigungsdomes und dem Rohbauelement ist in Anspruch 11 angegeben.

Die Erfindung wird nachfolgend anhand von Ausführungsbeispielen mit Bezug auf die Zeichnung näher erläutert.

Es zeigen:
- Fig. 1: in Seitenansicht Ausschnittweise ein Kraftfahrzeug mit mehreren Rohbauelementen,
- Fig. 2: ein Zusammenbauteil, bestehend aus einem Innenverkleidungsteil und einem Deformationselement,
- Fig. 3: das Deformationselement nach Fig. 2 in einer gedrehten Ansicht, und
- Fig. 4 und 5: jeweils einen Schnitt durch ein Rohbauelement mit einem daran befestigten Innenverkleidungsteil und einem dazwischen angeordneten Deformationselement entsprechend den Schnittlinien IV-IV und V-V in Fig. 2.

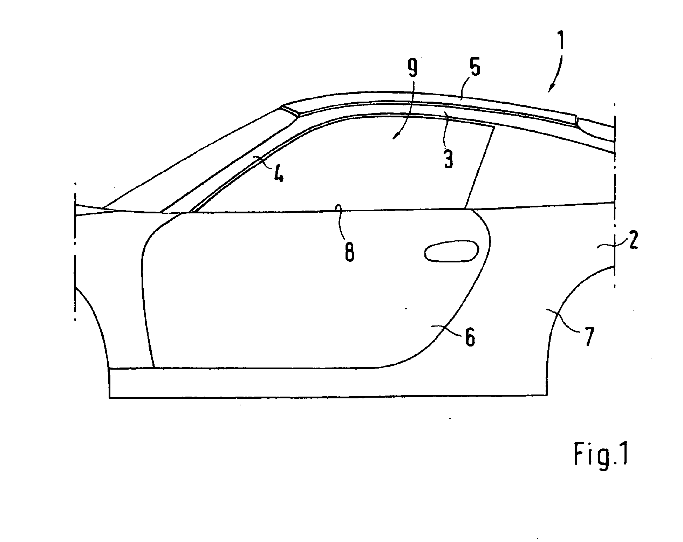

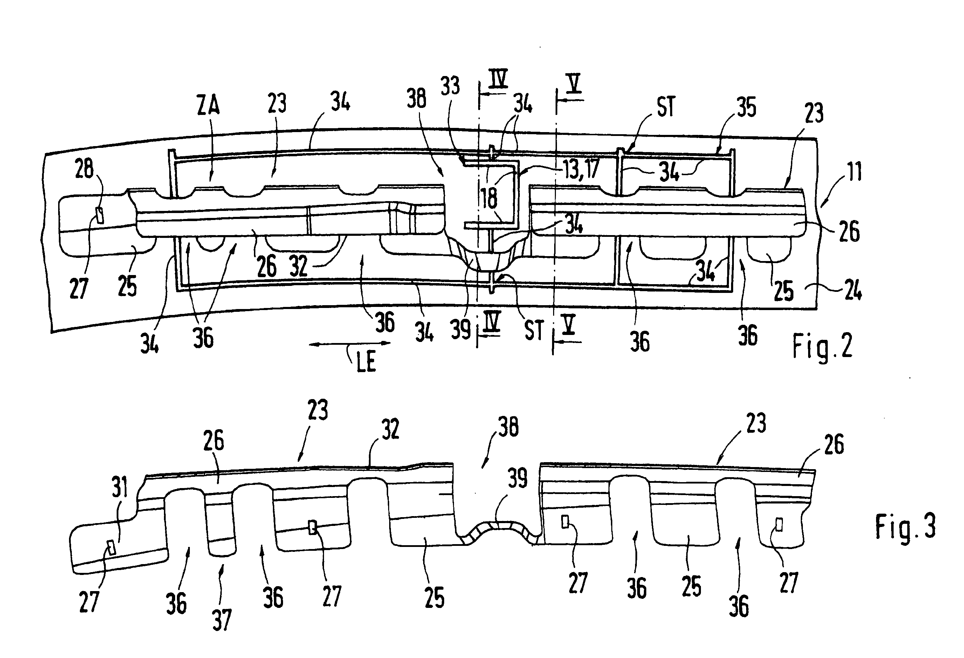

Ein in Fig. 1 ausschnittweise in Seitenansicht gezeigtes Kraftfahrzeug 1 umfasst einen Rohbau 2, der mehrere Rohbauelemente 3 bis 7 aufweist, die zu einer Karosserie bzw. einem Tragrahmen zusammengesetzt sind. Im einzelnen sind folgende Rohbauelemente 3 bis 7 dargestellt: Das Rohbauelement 3 bildet einen Dachholm, der in einem Abschnitt oberhalb einer Gürtellinie 8 in eine A-Säule (Rohbauelement 4) übergeht; das Rohbauelement 5 ist eine zwischen den Dachholmen 3 angeordnete Dachplatte, das Rohbauelement 6 ist als Seitentür realisiert und das Rohbauelement 7 stellt eine Seitenwand der Karosserie dar. Innerhalb des Rohbaus 2 ist ein auch als Fahrgastraum bezeichneter Fahrzeuginnenraum 9 ausgebildet, wobei die Rohbauelemente 3 bis 7 an ihrer diesem Innenraum 9 zugewandten Innenseite 10 mit an sich bekannten Innenverkleidungsteilen verblendet sind, von denen ein Innenverkleidungsteil 11 in den Fig. 2 bis 5 zu sehen ist. Zwischen dieser dem Innenraum 9 zugewandten Innenseite 10 der Rohbauelemente 3 bis 7 und dem zugeordneten Innenverkleidungsteil 11 wird zum Schutz eines Fahrzeuginsassen ein Deformationselement 23 (Fi. 2 bis 5) angeordnet. Ein solches Deformationselement 23 könnte selbstverständlich auch an der A-Säule (Rohbauelement 4) oder an einer anderen, hier nicht dargestellten Säule, wie beispielsweise B- oder C-Säule, oder an anderen langgestreckten Rohbauelementen verwendet werden.

Im folgenden wird anhand des Rohbauelements 3 (Dachholm) das Deformationselement 23 und das zugehörige Innenverkleidungsteil anhand der Fig. 2 bis 5 näher erläutert. In den Fig. 2 bis 5 sind gleiche bzw. gleich wirkende Teile wie in Fig. 1 mit denselben Bezugszeichen versehen, so dass auf deren Beschreibung verwiesen wird.

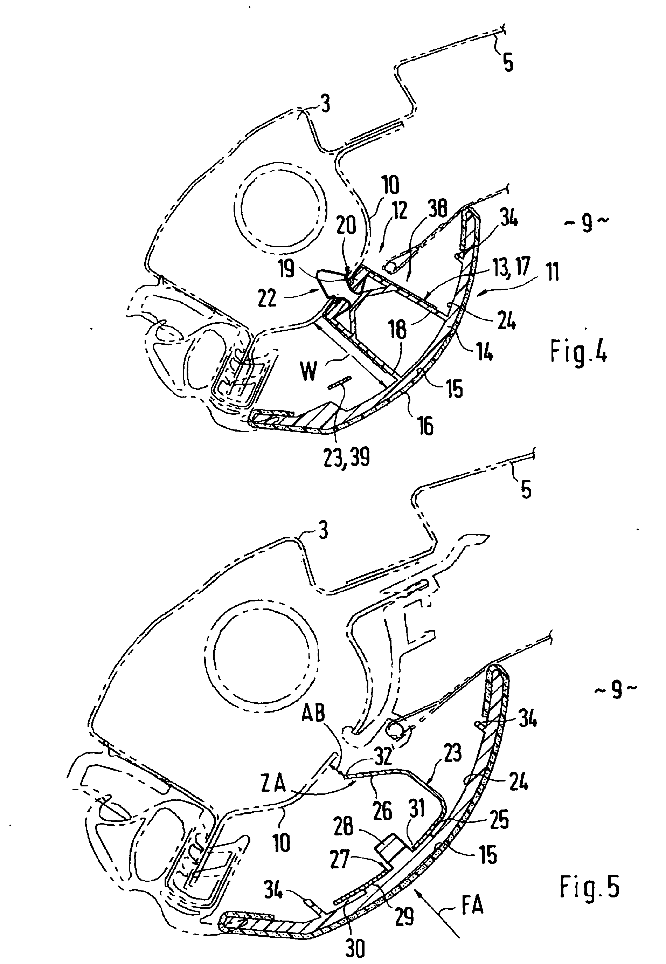

Aus den Fig. 4 und 5 wird deutlich, dass zwischen der dem Fahrzeuginnenraum 9 zugewandten Innenseite 10 des Rohbauelements 3, hier der Dachholm, und dem dieser Innenseite 10 zugewandt liegenden Innenverkleidungsteil 11 ein Zwischenraum 12 vorliegt, dessen Weite W im wesentlichen durch ein als Abstandhalter wirkendes Abstützelement 13 bestimmt wird. Dieses Abstützelement 13 wird vorzugsweise einstückig mit einem Trägerteil 14 des Innenverkleidungsteils 11 ausgebildet, welches Trägerteil 14 an seiner dem Fahrzeuginnenraum 9 zugewandten Außenfläche 15 mit einer Haut 16 zumindest abschnittweise überzogen sein kann. Das Abstützelement 13 ist als Befestigungsdom 17 ausgebildet, der von der Außenfläche 15 abstehende Seitenwände 18 und ein Dach 19 aufweist. In dem Dach 19 ist eine Öffnung 20 eingebracht, durch die ein innerhalb des Befestigungsdomes 17 abgestütztes Halteelement 21 hindurchgreift und somit in das Dach 19 eingesetzt ist. Dieses beispielsweise als Federklammer ausgeführte Halteelement 21 weist vorzugsweise eine Hintergriffskontur 22, die in das Rohbauelement 3 eingreift und somit das Innenverkleidungsteil 11 an dem Rohbauelement 3 hält. Dabei stützt sich das Dach 19 an der Innenseite 10 ab.

In den Zwischenraum 12 ist das energieabsorbierende Deformationselement 23 eingesetzt und an der dem Rohbauelement 3 zugewandten Innenfläche 24 des Verkleidungsteils 11 befestigt, wie dies nachfolgend anhand der Fig. 2, 3 und 5 näher beschrieben ist. Das Deformationselement 23 ist als langgestrecktes Blechteil in Form eines ggf. offenen oder geschlossenen Hohlprofil ausgebildet und erstreckt sich entlang des als Säulen und/oder Holmverkleidung ausgeführten Innenverkleidungsteils 11. Ferner ist das Deformationselement 23 als Hohlprofil mit mehreren Profilschenkeln realisiert und weist demgemäß zumindest einen Befestigungsschenkel 25 und einen Deformationsschenkel 26 auf, der abgebogen vom Befestigungsschenkel 25 ausgeht. Insbesondere aus den Fig. 2 und 5 geht hervor, dass das Deformationselement 23 als offenes Profil mit insbesondere einem C- oder U-förmigen Querschnitt versehen ist. Um das Deformationselement 23 an der Innenfläche 24 befestigen zu können, weist der Befestigungsschenkel 25 einen oder mehrere Befestigungsdurchbrüche 27 auf, durch die eine oder mehrere von der Innenfläche 24 entspringende Befestigungsnasen 28 hindurchgreifen. Die Befestigungsnase 28 geht vorzugsweise von einem auf der Innenfläche 24 ausgebildeten Podest 29 aus, der das Deformationselement 23 unter Bildung eines Spaltes 30 beabstandet abstützt. Die insbesondere aus Kunststoff bestehende Befestigungsnase 28 wird für ein sicheres Halten des Deformationselementes 23 an der Innenfläche 24 umgeformt, beispielsweise durch Wärmeeinwirkung durch Schweißen, so dass die verformte Befestigungsnase (nicht dargestellt) einen Rand 31 des entsprechenden Befestigungsdurchbruches 27 übergreift.

Durch die Ausgestaltung des Deformationselementes 23 als Hohlprofil kann der Deformationsschenkel 26 Energie absorbierend verformt werden, wenn die Weite W des Zwischenraums 12 aufgrund dieser einwirkenden Kraft FA verringert wird, also das Abstützelement 13 nachgibt und sich das Innenverkleidungsteil 11 in Richtung Rohbauelement 3 verlagert. Dabei stützt sich der Deformationsschenkel 26 an der Innenseite 10 des Rohbauelements 3 ab, wird verformt und bewegt sich dabei in Richtung des Befestigungsschenkels 26.

In Fig. 5 ist dargestellt, dass der Deformationsschenkel 26, insbesondere mit seinem freien Ende 32, im unverformten Zustand ZA mit Abstand AB zur Innenseite 10 des Rohbauelementes 3 angeordnet ist. Der Deformationsschenkel 26 ist also freistehend ausgebildet und lediglich über den Befestigungsschenkel 25 mit dem Innenverkleidungsteil 11 verbunden. Um das Deformationsverhalten des Deformationselements 23 für die Energieabsorbierung nicht oder nur unwesentlich zu beeinflussen, ist das Abstützelement 13 in seinem Deformationsverhalten auf das Deformationsverhalten des Deformationselements 23 abgestimmt. Dies kann dadurch erreicht werden, dass das Abstützelement 13 so ausgebildet ist, dass es bei dem Einwirken der Kraft FA derart versagt bzw. verformt, dass sich das Innenverkleidungsteil 11 hauptsächlich über das Deformationselement 23 an dem Rohbauelement 3 abstützt. Nach einem besonderen Ausführungsbeispiel weist das als Befestigungsdom 17 realisierte und abgestimmte Abstützelement 13 zumindest eine Seitenwand 18 auf, die gegenüber den anderen Seitenwänden 18 geschwächt ist. Dies kann beispielsweise durch einen in die Seitenwand 18 eingebrachten Schwächungsdurchbruch 33 oder durch eine vollständig entfernte Seitenwand 18 realisiert sein.

An der Innenfläche 24 des Innenverkleidungsteils 11 sind mehrere Stege 34 als Erhebungen auf der Innenfläche 24 ausgebildet. Die Stege 34 können in Richtung der Längserstreckung LE des Innenverkleidungsteils 11 und/oder quer dazu verlaufen und können an ihren Schnittstellen ST mit anderen Stegen 34 verbunden sein. Die Stege 34 bilden so eine auf der Innenfläche 24 angeordnete erhabene Struktur 35, die insbesondere der Versteifung des Innenverkleidungsteils 11 dient. Die Stege 34 der Struktur 35 können - wie in Fig. 5 zu sehen - eine unterschiedliche Höhe aufweisen und insbesondere höher sein als das Podest 29, auf dem/denen sich der Befestigungsschenkel 25 abstützt. Damit der Befestigungsschenkel 25 nicht auf den Stegen 34 aufliegt, weist der Befestigungsschenkel 25 mehrere Aussparungen 36 auf, die sich bis in den Deformationsschenkel 26 hinein erstrecken können, so dass das Deformationselement quasi eine Kammstruktur 37 aufweist, wie dies Fig. 3 deutlich zeigt. In den Aussparungen 36 sind die Stege 34 der Struktur 35 angeordnet.

Jeweils neben dem Abstützelement 13 ist ein Deformationselement 23 an dem Innenverkleidungsteil 11 befestigt. Diese beiden Deformationselemente 23 sind in Reihe, jedoch mit Abstand zueinander angeordnet, so dass ein Freiraum 38 gebildet ist, in dem das Abstützelement 13 angeordnet ist. Die beiden Deformationselemente 23 sind über eine Verbindungslasche 39 aneinander gekoppelt, so dass sie gemeinsam an dem Innenverkleidungsteil 11 montiert werden können. Die Verbindungslasche 39 ist um das Abstützelement 13 herumgeführt und verbindet insbesondere die beiden Befestigungsschenkel 25 der beiden Deformationselemente 23. Zusätzlich ist die Verbindungslasche - wie Fig. 3 zeigt - als Bogen ausgeführt, die den von dem Abstützelement 13 ausgehenden Steg 34 überspannt. Die beiden Deformationselemente 23 und die Verbindungslasche 39 sind vorzugsweise aus einem Stück hergestellt sind.

## Patentansprüche

1. Kraftfahrzeug (1), insbesondere Personenwagen, mit wenigstens einem Rohbauelement (3), einem Innenverkleidungsteil (11) für das Rohbauelement (3) und mit einem zwischen dem Rohbauelement (3) und dem Innenverkleidungsteil (11) angeordneten Energie absorbierenden Deformationselement (23), das als Blechteil in Form eines langgestreckten Hohlprofils mit zumindest einem Befestigungsschenkel (25) und zumindest einem Deformationsschenkel (26) ausgebildet ist und sich entlang des Innenverkleidungsteils (11) erstreckt, welcher Befestigungsschenkel (25) mit dem Innenverkleidungsteil (11) verbunden ist und welcher Deformationsschenkel (26) von dem Befestigungsschenkel (25) ausgeht und dem Rohbauelement (3) zugewandt liegt, wobei das Innenverkleidungsteil (11) über ein deformierbares, in seinem Deformationsverhalten an das Deformationselement (23) abgestimmtes Abstützelement (13) an dem Rohbauelement (3 bis 7) befestigt ist, der Deformationsschenkel (26) freistehend mit Abstand (AB) zum Rohbauelement (3 bis 7) liegt und das Deformationselement (23) im Querschnitt gesehen als offenes Profil mit einem C- oder U-förmigen Querschnitt ausgebildet ist, **dadurch gekennzeichnet, dass** das Deformationselement (23) mit seinem offenen Profil so in einem zwischen einer Innenseite (10) des Rohbauelements (3) und dem Innenverkleidungsteil (11) liegenden Zwischenraum (12) angeordnet ist, dass bei einer darauf einwirkenden Kraft (FA) sich der Deformationsschenkel (26) an der Innenseite (10) abstützt, sich verformt und dabei sich in Richtung des Befestigurigsschenkels (25) bewegt.

2. Kraftfahrzeug nach Anspruch 1, **dadurch gekennzeichnet, dass** das Innenverkleidungsteil (11) an einer dem Befestigungsschenkel (25) zugewandten Innenfläche (24) eine mehrere Stege (34) aufweisende Struktur (35) umfasst.

3. Kraftfahrzeug nach Anspruch 2, **dadurch gekennzeichnet, dass** zumindest der Befestigungsschenkel (25) mehrere Aussparungen (36) besitzt, in denen die Stege (34) angeordnet sind.

4. Kraftfahrzeug nach Anspruch 1, **dadurch gekennzeichnet, dass** an dem Innenverkleidungsteil (11) zwei Deformationselemente (23) in Reihe, jedoch mit Abstand (Freiraum 38) zueinander angeordnet sind, und dass zwischen den beiden Deformationselementen (23) das Abstützelement (13) angeordnet ist.

5. Kraftfahrzeug nach Anspruch 4, **dadurch gekennzeichnet, dass** die beiden Deformationselemente (23) über eine Verbindungslasche (39) miteinander verbunden sind und dass die Verbindungslasche (39) an dem Abstützelement (13) vorbei geführt ist.

6. Kraftfahrzeug nach Anspruch 5, **dadurch gekennzeichnet, dass** die Verbindungslasche (34) einen Steg der Struktur (35) überspannt.

7. Kraftfahrzeug nach Anspruch 1, **dadurch gekennzeichnet, dass** der Befestigungsschenkel (25) zumindest einen Befestigungsdurchbruch (27) aufweist, durch den eine von einer Innenfläche (24) des Innenverkleidungsteils (11) ausgehende Befestigungsnase (28) hindurchgreift.

8. Kraftfahrzeug nach Anspruch 7, **dadurch gekennzeichnet, dass** die Befestigungsnase (28), insbesondere durch Umformung, einen Rand (31) des Befestigungsdurchbruches 27) übergreift.

9. Kraftfahrzeug nach Anspruch 1, **dadurch gekennzeichnet, dass** das Abstützelement (13) als Befestigungsdom (17) ausgebildet ist, dessen Dach (19) sich auf dem Rohbauelement (3 bis 7) abstützt.

10. Kraftfahrzeug nach Anspruch 9, **dadurch gekennzeichnet**, der Befestigungsdom (17) in zumindest einer Seitenwand (18) einen Schwächungsdurchbruch (33) aufweist.

11. Kraftfahrzeug nach Anspruch 9, **dadurch gekennzeichnet, dass** in das Dach (19) des Befestigungsdoms (17) ein ein Hintergriffselement (22) aufweisendes Halteelement (21) eingesetzt ist, welches Hintergriffselement (22) in das Rohbauelement (3 bis 7) eingesteckt ist.

12. Kraftfahrzeug nach Anspruch 1, **dadurch gekennzeichnet, dass** das Rohbauelement (3 bis 7) eine Säule oder einen Dachholm bildet.

## Claims

1. Motor vehicle (1), in particular passenger vehicle, with at least one bodyshell element (3), an interior trim panel (11) for the bodyshell element (3) and with an energy-absorbing deformation element (23) which is arranged between the bodyshell element (3) and the interior trim panel (11), is designed as a sheet-metal part in the form of an elongate hollow profile with at least one fastening limb (25) and at least one deformation limb (26) and extends along the interior trim panel (11), which fastening limb (25) is connected to the interior trim panel (11) and which deformation limb (26) starts from the fastening limb (25) and is located facing the bodyshell element (3), wherein the interior trim panel (11) is fastened to the bodyshell element (3 to 7) via a deformable supporting element (13), the deformation behaviour of which is coordinated with the deformation element (23), the deformation limb (26) is free-standing at a distance (AB) from the bodyshell element (3 to 7), and the deformation element (23) is designed, as seen in cross section, as an open profile with a C- or U-shaped cross section, **characterized in that** the deformation element (23) is arranged with its open profile in an intermediate space (12) located between an inner side (10) of the bodyshell element (3) and the interior trim panel (11) such that, when a force (FA) acts thereon, the deformation limb (26) is supported on the inner side (10), is deformed and, in the process, moves in the direction of the fastening limb (25).

2. Motor vehicle according to Claim 1, **characterized in that,** on an inner surface (24) facing the fastening limb (25), the interior trim panel (11) comprises a structure (35) having a plurality of webs (34).

3. Motor vehicle according to Claim 2, **characterized in that** at least the fastening limb (25) has a plurality of recesses (36) in which the webs (34) are arranged.

4. Motor vehicle according to Claim 1, **characterized in that** two deformation elements (23) are arranged in a row, but at a distance (clearance 38) from each other, on the interior trim panel (11), and **in that** the supporting element (13) is arranged between the two deformation elements (23).

5. Motor vehicle according to Claim 4, **characterized in that** the two deformation elements (23) are connected to each other via a connecting bracket (39), and **in that** the connecting bracket (39) is guided past the supporting element (13).

6. Motor vehicle according to Claim 5, **characterized in that** the connecting bracket (34) spans a web of the structure (35).

7. Motor vehicle according to Claim 1, **characterized in that** the fastening limb (25) has at least one fastening aperture (27) through which a fastening lug (28) starting from an inner surface (24) of the interior trim panel (11) reaches.

8. Motor vehicle according to Claim 7, **characterized in that** the fastening lug (28) engages over an edge (31) of the fastening aperture (27), in particular by means of deformation.

9. Motor vehicle according to Claim 1, **characterized in that** the supporting element (13) is designed as a fastening dome (17), the roof (19) of which is supported on the bodyshell element (3 to 7).

10. Motor vehicle according to Claim 9, **characterized in that** the fastening dome (17) has a weakening aperture (33) in at least one side wall (18).

11. Motor vehicle according to Claim 9, **characterized in that** a retaining element (21) which has an engage-behind element (22) which is plugged into the bodyshell element (3 to 7) is inserted into the roof (19) of the fastening dome (17).

12. Motor vehicle according to Claim 1, **characterized in that** the bodyshell element (3 to 7) forms a pillar or a roof strut.

## Revendications

1. Véhicule automobile (1), en particulier pour le transport de personnes, comprenant au moins un élément de structure de carrosserie (3), une partie d'habillage interne (11) pour l'élément de structure de carrosserie (3) et un élément de déformation (23) absorbant de l'énergie disposé entre l'élément de structure de carrosserie (3) et la partie d'habillage interne (11), qui est réalisé sous forme de partie en tôle en forme de profilé creux allongé avec au moins une branche de fixation (25) et au moins une branche de déformation (26) et qui s'étend le long de la partie d'habillage interne (11), laquelle branche de fixation (25) est connectée à la partie d'habillage interne (11) et laquelle branche de déformation (26) part de la branche de fixation (25) et est tournée vers l'élément de structure de carrosserie (3), la partie d'habillage interne (11) étant fixée à l'élément de structure de carrosserie (3 à 7) par le biais d'un élément de support (13) déformable, adapté dans son comportement de déformation à l'élément de déformation (23), la branche de déformation (26) se situant de manière autoportante à distance (AB) de l'élément de structure de carrosserie (3 à 7), et l'élément de déformation (23), vu en section transversale, étant réalisé sous forme de profilé ouvert avec une section transversale en forme de C ou de U, **caractérisé en ce que** l'élément de déformation (23) est disposé avec son profilé ouvert dans un espace intermédiaire (12) situé entre un côté interne (10) de l'élément de structure de carrosserie (3) et la partie d'habillage interne (11) de telle sorte que dans le cas où une force (FA) s'exerce sur elle, la branche de déformation (26) s'appuie sur le côté interne (10), se déforme et se déplace en l'occurrence dans la direction de la branche de fixation (25).

2. Véhicule automobile selon la revendication 1, **caractérisé en ce que** la partie d'habillage interne (11) comprend, sur une surface interne (24) tournée vers la branche de fixation (25), une structure (35) présentant plusieurs nervures (34).

3. Véhicule automobile selon la revendication 2, **caractérisé en ce qu'**au moins la branche de fixation (25) possède plusieurs évidements (36), dans lesquels sont disposées les nervures (34).

4. Véhicule automobile selon la revendication 1, **caractérisé en ce que** deux éléments de déformation (23) sont disposés en rangée sur la partie d'habillage interne (11), mais à distance (espace libre 38) l'un par rapport à l'autre, et **en ce que** l'élément de support (13) est disposé entre les deux éléments de déformation (23).

5. Véhicule automobile selon la revendication 4, **caractérisé en ce que** les deux éléments de déformation (23) sont connectés l'un a l'autre par le biais d'une patte de connexion (39), et **en ce que** la patte de connexion (39) est guidée devant l'élément de support (13).

6. Véhicule automobile selon la revendication 5, **caractérisé en ce que** la patte de connexion (34) recouvre une nervure de la structure (35).

7. Véhicule automobile selon la revendication 1, **caractérisé en ce que** la branche de fixation (25) présente au moins un orifice de fixation (27) à travers lequel s'engage un nez de fixation (28) partant d'une surface interne (24) de la partie d'habillage interne (11).

8. Véhicule automobile selon la revendication 7, **caractérisé en ce que** le nez de fixation (28), vient en prise autour d'un bord (31) de l'orifice de fixation (27) en particulier par déformation.

9. Véhicule automobile selon la revendication 1, **caractérisé en ce que** l'élément de support (13) est réalisé sous forme de dôme de fixation (17) dont le toit (19) s'appuie sur l'élément de structure de carrosserie (3 à 7).

10. Véhicule automobile selon la revendication 9, **caractérisé en ce que** le dôme de fixation (17) présente dans au moins une paroi latérale (18), un orifice d'affaiblissement (33).

11. Véhicule automobile selon la revendication 9, **caractérisé en ce que** dans le toit (19) du dôme de fixation (17), un élément de retenue (21) présentant un élément d'engagement par l'arrière (22), lequel élément d'engagement par l'arrière (22) est inséré dans l'élément de structure de carrosserie (3 à 7).

12. Véhicule automobile selon la revendication 1, **caractérisé en ce que** l'élément de structure de carrosserie (3 à 7) forme une colonne ou un longeron de toit.
